# EUROPÄISCHE PATENTSCHRIFT

(11) **EP 1 875 589 B1**
(45) Veröffentlichungstag und Bekanntmachung des Hinweises auf die Patenterteilung: **28.11.2012**
(21) Anmeldenummer: 06724853.4
(22) Anmeldetag: 20.02.2006
(51) Int. Cl.: H02M 1/00

(54) **VERFAHREN UND VORRICHTUNG ZUR STROM- UND/ODER SPANNUNGSABHÄNGIGEN TEMPERATURBEGRENZUNG**
METHOD AND DEVICE FOR TEMPERATURE LIMITATION ACCORDING TO CURRENT AND/OR VOLTAGE
PROCEDE ET DISPOSITIF DE LIMITATION DE TEMPERATURE EN FONCTION DU COURANT ET/OU DE LA TENSION

(30) Priorität: 18.04.2005 DE 102005017801
(43) Veröffentlichungstag der Anmeldung: 09.01.2008
(73) Patentinhaber: ROBERT BOSCH GMBH, 70442 Stuttgart (DE)
(72) Erfinder: EISENHARDT, Harald, 71277 Rutesheim (DE)
(86) Internationale Anmeldenummer: PCT/EP2006/060090
(87) Internationale Veröffentlichungsnummer: WO 2006/111430

(56) Entgegenhaltungen:
- US-A- 5 981 918
- US-A- 6 078 511
- US-A1- 2003 214 770

## Beschreibung

Die Erfindung betrifft ein Verfahren zur strom- und/oder spannungsabhängigen Temperaturbegrenzung bei einer einem elektrischen Motor zugeordneten Ansteuervorrichtung, gemäß dem Oberbegriff des Anspruchs 1, sowie eine entsprechende Vorrichtung gemäß dem Oberbegriff des Anspruchs 4 und einen Gebläseregler gemäß dem Anspruch 6.

### Stand der Technik

Verfahren zur Temperaturbegrenzung bei einer einem elektrischen Motor zugeordneten Ansteuervorrichtung sind bekannt. Dazu wird beispielsweise die Temperatur der Ansteuervorrichtung oder die Temperatur eines Gehäuses, in der die Ansteuervorrichtung angeordnet ist, gemessen und die Ansteuerungsvorrichtung abgeschaltet, sobald ein maximal zulässiger Temperaturwert überschritten wird siehe US 2003/0214770 A1 bzw. US 6,078,511 Zudem sind auch entsprechende Vorrichtungen bekannt, die beispielsweise spezielle Leistungshalbleiter aufweisen, die bauartbedingt über einen Übertemperaturschutz verfügen. Wenngleich sich die Verfahren und Vorrichtungen gemäß dem Stand der Technik bei verschiedenen Applikationen bewährt haben, so sind sie für eine Anwendung mit preisgünstigen und/oder kleinen elektrischen Motoren zu aufwendig oder zu teuer. Eine preiswerte Lösung ist dabei insbesondere für Gebläseregler eines Kraftfahrzeugs gewünscht, der zur Geschwindigkeitsregelung eines Klimagebläsemotors eingesetzt wird. Bekannt ist es hier, eine Temperaturbegrenzung mit einer fest eingestellten Maximaltemperatur einzusetzen. Um ein voreiliges Ansprechen dieser Schutzvorrichtung zu verhindern, wird die Maximaltemperatur typischerweise so eingestellt, dass sie bei hoher Umgebungstemperatur und maximalem Strom noch nicht eingreift. Gleichwohl sind in diesen Betriebszuständen die Lötstellen und stromführenden Elemente des Gebläsereglers extrem belastet, sodass es zu einer Lötstellenzerrüttung kommen kann. Bei einer hohen Betriebsspannung und im Fehlerfall, beispielsweise bei einem blockierten oder schwergängigen Motor, kann die Verlustleistung in den Leistungshalbleitern des Gebläsereglers -speziell bei einem linearen Gebläseregler- so schnell ansteigen, dass die Leistungsbauelemente des Gebläsereglers geschädigt oder zumindest vorgeschädigt werden und die Lebensdauer des Gebläsereglers eingeschränkt wird. Dabei ist es keineswegs so, dass ein schwergängiger Motor stets mit einem mechanischen Defekt gleichzusetzen ist. Beispielsweise ist der Gebläsemotor bereits dann einem erhöhten Widerstand ausgesetzt beziehungsweise kommt sogar zum Stillstand, wenn sich das Kraftfahrzeug mit hoher Geschwindigkeit bewegt. Dabei entsteht ein Staudruck vor dem Gebläsemotor und gegebenenfalls zudem ein Unterdruck hinter dem Gebläsemotor, insbesondere dann, wenn ein Schiebedach etwas geöffnet ist. Auch eine erhöhte Betriebsspannung muss nicht zwangsläufig mit einem Fehlerfall einhergehen. Vielmehr wird in modernen Kraftfahrzeug-Bordnetzen die Generatorspannung der Lichtmaschine mit der Temperatur der Fahrzeugbatterie variiert. So wird bei tiefen Außentemperaturen typischerweise die Ladespannung erhöht, um in diesen Betriebszuständen eine erhöhte Bordnetzleistung für den Winterbetrieb mit vielen eingeschalteten elektrischen Verbrauchern zu ermöglichen. Umgekehrt wird bei hoher Außentemperatur die Ladespannung abgesenkt, da eine zu hohe Ladespannung die Lebensdauer der Fahrzeugbatterie vermindert.

### Vorteile der Erfindung

Bei einem Verfahren zur strom- und/oder spannungsabhängigen Temperaturbegrenzung bei einer einem elektrischen Motor zugeordneten Ansteuervorrichtung, insbesondere bei einem Gebläseregler eines Kraftfahrzeugs, ist erfindungsgemäß vorgesehen, dass die Temperaturbegrenzung in Abhängigkeit von mindestens einem Betriebsparameter des Motors durchgeführt wird. Dies bedeutet, dass die Temperaturbegrenzung mit dem Betriebsverhalten und dem jeweiligen aktuellen Betriebszustand des Motors abgestimmt wird. Musste gemäß dem Stand der Technik noch hingenommen werden, dass bei erhöhten Anforderungen entweder die Ansteuervorrichtung großzügiger auszulegen ist beziehungsweise eine verkürzte Lebensdauer durch eine Erhöhung der Maximalwerte hinzunehmen ist, so bietet die Erfindung stattdessen die Möglichkeit, die Temperaturbegrenzung mit einfachen Mitteln dynamisch zu gestalten. Es lässt sich dadurch insbesondere eine kostenoptimierte Auslegung der Ansteuervorrichtung beziehungsweise des Gesamtgeräts erzielen, unter anderem deshalb, da eine Überdimensionierung des Systems nicht erforderlich ist. Entscheidend ist dabei unter anderem, dass erkannt wurde, dass nicht nur Fehlerfälle, sondern auch Situationen mit ungünstigen Betriebsbedingungen (zum Beispiel ein schwergängiger Motor bei hoher Geschwindigkeit oder eine erhöhte Generatorspannung bei niedrigen Außentemperaturen) berücksichtigt und behandelt werden müssen. Einzelheiten zu einem solchen Vorgehen werden im Ausführungsbeispiel näher dargelegt.

Vorteilhafterweise ist der Betriebsparameter aus der Gruppe Betriebsstrom und Versorgungsspannung gewählt. Unter dem Betriebsstrom soll dabei der Strom verstanden werden, der durch die Ansteuervorrichtung zum Motor geleitet wird. Unter der Versorgungsspannung soll die Spannung verstanden werden, die am Motor beziehungsweise an der Ansteuervorrichtung anliegt. Dabei ist es möglich, den Betriebsstrom und die Versorgungsspannung alternativ, aber auch beide zu überwachen.

Bevorzugt wird bei steigendem Betriebsstrom zumindest ab einem vorgegebenen Schwellenwert der Maximalwert einer zulässigen Temperatur der Ansteuervorrichtung reduziert. Kommt ein Temperaturregler zum Einsatz, so bedeutet dies, dass die durch den Temperaturregler eingestellte Temperatur bei steigendem Betriebsstrom (zumindest ab einem vorgegebenen Schwellenwert) reduziert wird. Die Reduzierung des Maximalwerts wird vorzugsweise linear durchgeführt, kann aber grundsätzlich auch jeden anderen Kurvenverlauf annehmen.

Mit Vorteil wird bei steigender Versorgungsspannung zumindest ab einem vorgegebenen Schwellenwert der Maximalwert einer zulässigen Temperatur der Ansteuervorrichtung reduziert. Kommt ein Temperaturregler zum Einsatz, so bedeutet dies, dass die durch den Temperaturregler eingestellte Temperatur bei steigender Versorgungsspannung (zumindest ab einem vorgegebenen Schwellenwert) reduziert wird. Die Reduzierung des Maximalwerts wird vorzugsweise linear durchgeführt, kann aber grundsätzlich auch jeden anderen Kurvenverlauf annehmen.

Bei einer bevorzugten Ausführungsform werden bei einer Temperaturbegrenzung in Abhängigkeit von mehreren Betriebsparametern die für jeden Betriebsparameter vorgesehenen Reduzierungen des Maximalwerts einer zulässigen Temperatur zu einer Gesamtreduzierung des Maximalwerts zusammengeführt. Dies bedeutet, dass aus den vorgesehenen einzelnen Reduzierungen des Maximalwerts für die einzelnen Betriebsparameter ein Gesamtwert bestimmt wird, um den dann der Maximalwert einer zulässigen Temperatur der Ansteuervorrichtung reduziert wird. Dabei ist es insbesondere vorteilhaft, eine auf den Betriebsstrom bezogene Reduzierung und eine auf die Versorgungsspannung bezogene Reduzierung zu addieren.

Vorteilhafterweise wird die Temperaturbegrenzung aktiviert, bevor der Maximalwert einer zulässigen Temperatur der Ansteuervorrichtung erreicht wird. Durch eine vorzeitige Temperaturabregelung kann einerseits das Ansteigen der Verlustleistung der Ansteuervorrichtung und die daraus möglicherweise resultierende Schädigung von Leistungsbauelementen verhindert werden. Andererseits kann so auch ein Ansteigen des Betriebsstroms unterbunden werden, sodass kein unzulässiger Temperaturanstieg an den vom Betriebsstrom belasteten Lötstellen der Ansteuervorrichtung auftritt.

Die Erfindung betrifft ferner eine Vorrichtung zur strom- und/oder spannungsabhängigen Temperaturbegrenzung bei einer einem elektrischen Motor zugeordneten Ansteuervorrichtung, insbesondere bei einem Gebläseregler eines Kraftfahrzeugs, mit einer die Temperaturbegrenzung in Abhängigkeit von mindestens einem Betriebsparameter des Motors durchführenden elektrischen Schaltvorrichtung.

Bevorzugt weist die Schaltvorrichtung einen Temperaturregler auf, der insbesondere als Verstärker ausgeführt ist und dessen Ausgang einem die Ansteuerung des Motors beeinflussenden Leistungshalbleiterbauelement zugeordnet ist. Dadurch ergibt sich eine schnelle und einfach zu realisierende Rückwirkung auf den Betriebszustand des Motors und damit auch auf den Betriebszustand der Ansteuervorrichtung.

Es ist vorteilhaft, wenn dem Temperaturregler ein Bauelement mit einer temperaturabhängigen Eigenschaft zugeordnet ist, insbesondere ein Widerstand mit einem negativen Temperaturkoeffizienten. Mittels des Bauelements lässt sich so auf einfache und preiswerte Weise eine Temperaturmessung durchführen.

Schließlich betrifft die Erfindung einen Gebläseregler mit einer zuvor beschriebenen Vorrichtung mit einem oder mehreren der genannten Merkmale.

### Zeichnungen

Die Erfindung wird nun anhand von Ausführungsbeispielen näher erläutert. Dabei zeigen
- Figur 1a: eine Temperaturbegrenzung bei einem linearen Gebläseregler in Abhängigkeit vom Betriebsstrom,
- Figur 1b: eine Temperaturbegrenzung in Abhängigkeit von der Versorgungsspannung, und
- Figur 2: einen Gebläseregler mit einer Vorrichtung zur strom - und/oder spannungsabhängigen Temperaturbegrenzung.

### Beschreibung der Ausführungsbeispiele

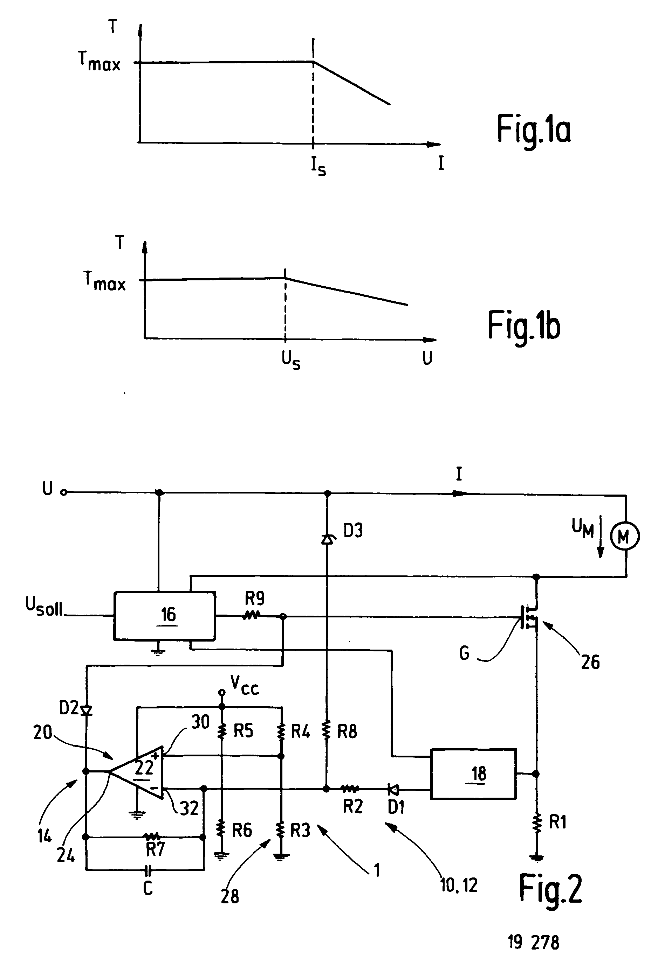

Figur 1a zeigt eine Temperaturbegrenzung bei einem Gebläseregler in Abhängigkeit vom Betriebsstrom. Dabei ist entlang der Abszisse ein Betriebsstrom I und entlang der Ordinate die Temperatur T einer Ansteuervorrichtung beziehungsweise eines Gebläsereglers abgetragen. Sofern sich der Betriebsstrom unterhalb eines Stromschwellenwerts I_{S} befindet, ist ein Maximalwert Tₘₐₓ einer zulässigen Temperatur der Ansteuervorrichtung erlaubt. Dieser Maximalwert Tₘₐₓ ergibt sich regelmäßig design- und/oder bauartbedingt. Überschreitet während des Betriebs der Betriebsstrom I nunmehr den Stromschwellenwert I_{S}, so wird der maximal zulässige Temperaturwert abgesenkt. Die Absenkung geschieht hier linear, kann aber auch jeder anderen Kurvenform folgen.

Eine ähnliche Situation ist in Figur 1b gezeigt. Hier ist entlang der Abszisse eine Versorgungsspannung U und entlang der Ordinate eine maximal zulässige Temperatur T abgetragen. Sofern die Versorgungsspannung U unterhalb eines Versorgungsspannungsschwellwerts U_{S} liegt, ist eine maximale Temperatur Tₘₐₓ eingestellt. Überschreitet die Versorgungsspannung U den Versorgungsspannungsschwellwert U_{S}, so wird dieser maximale Temperaturwert reduziert.

Figur 2 zeigt ein Schaltbild einer Vorrichtung 1 zur strom- und/oder spannungsabhängigen Temperaturbegrenzung bei einer einem elektrischen Motor M zugeordneten Ansteuervorrichtung 10, insbesondere bei einem Gebläseregler 12 eines Kraftfahrzeugs mit einer die Temperaturbegrenzung in Abhängigkeit von mindestens einem Betriebsparameter des Motors M durchführenden elektrischen Schaltvorrichtung 14. Die Vorrichtung 1 weist einen Motorspannungsregler 16, eine Motorstromerfassungseinrichtung 18 und einen Temperaturregler 20 auf, der hier als Verstärker 22 ausgeführt ist. Ein Ausgang 24 des Verstärkers 22 ist dem Gate G eines die Ansteuerung des Motors M beeinflussenden Leistungshalbleiterbauelements 26 zugeordnet. Die Vorrichtung 1 weist zudem Widerstände R1 bis R9, Dioden D1 bis D3 und einen Kondensator C auf. Die Vorrichtung 1 wird von einer Versorgungsspannung U und einer Hilfsspannung V_{CC} gespeist. Während des Betriebs stellt sich ein Betriebsstrom I ein. Besonders zu beachten ist der Widerstand R3, bei dem es sich um ein Bauelement 28 mit einer temperaturabhängigen Eigenschaft, hier einem negativen Temperaturkoeffizienten, handelt.

Es ergibt sich folgende Funktionsweise. Im Normalbetrieb wird die Gebläsemotorspannung UM in Abhängigkeit eines extern vorgegebenen Sollwerts U_{SOLL} durch den Motorspannungsregler 16 eingestellt. Dabei ist der Temperaturregler 20 nicht in Betrieb und gibt an seinem Ausgang 24 den maximal möglichen Spannungswert aus. Steigt nun die Temperatur der Ansteuervorrichtung 10 an, so verkleinert sich der Wert des Widerstands R3. Dies wiederum führt dazu, dass die Spannung am nicht-invertierenden Eingang 30 sinkt und kleiner wird als die Spannung am invertierenden Eingang 32. Dadurch wird der Ausgang 24 des Temperaturreglers 20 aktiviert. Durch die Kopplung des Ausgangs 24 mit dem Gate G des die Ansteuerung des Motors M beeinflussenden Leistungshalbleiterbauelements 26 wird die am Gate G anliegende Steuerspannung reduziert. Diese Spannungsreduzierung hält solange an, bis sich in Folge des Absinkens der gemessenen Temperatur der Wert des Widerstands R3 wieder erhöht. Die Spannungsverhältnisse am invertierenden Eingang 32 und am nicht-invertierenden Eingang 30 kehren sich wieder um und es liegt erneut der Normalbetrieb vor.

Zusätzlich zu dieser Funktion wird auch ein Ansteigen der Versorgungsspannung U überwacht. Für diese Funktion ist die Zehnerdiode D3 vorgesehen, die bei einem Ansteigen der Versorgungsspannung U leitend wird. Dies führt dazu, dass die Spannung am invertierenden Eingang 32 des Temperaturreglers 20 ansteigt. Dadurch, dass die Spannung am invertierenden Eingang 32 angehoben wurde, erfolgt die zuvor beschriebene Temperaturabregelung nun bei einer geringeren Temperatur. Dies liegt darin begründet, dass nun bereits ein geringerer Temperaturanstieg ausreichend ist, den Wert des Widerstands R3 so weit abzusenken, dass in Verbindung mit dem bereits durch die Zehnerdiode D3 erhöhten Spannungsniveau am invertierenden Eingang 32 nun wieder die zuvor beschriebene Umkehr der Spannungsverhältnisse eintritt. Durch die vorzeitige Temperaturabregelung erfolgt durch das Ansteigen der Verlustleistung im Leistungshalbleiterbauelement 26 bei steigender Versorgungsspannung U keine Schädigung der Leistungselektronik.

Die Vorrichtung 1 übt mittels der Diode D1, die mit der Motorstromerfassungsvorrichtung 18 verbunden ist, noch eine weitere Funktion aus. Bei einer Überschreitung des Spannungspegels am invertierenden Eingang 32 des Temperaturreglers 20 zuzüglich der Diodenflussspannung von der Diode D1 durch das Ausgangssignal der Motorstromerfassungsvorrichtung 18 wird die Diode D1 leitend. Dies führt dazu, dass die Spannung am invertierenden Eingang 32 des Temperaturreglers 20 ansteigt. Auch hier stellt sich wiederum -wie bei der steigenden Versorgungsspannung U- der Effekt ein, dass die Temperaturabregelung bei einer niedrigeren Temperatur stattfindet. Durch die vorzeitige Temperaturabregelung erfolgt bei einem Anstieg des Betriebsstroms I in Sonderbetriebsbedingungen kein unzulässiger Temperaturanstieg an den mit Betriebsstrom belasteten Lötstellen des Gebläsereglers 12.

Die gezeigte Vorrichtung 1 lässt sich mit einfachen Mitteln kostengünstig implementieren, sodass auch Ansteuervorrichtungen beziehungsweise Motoren in einem Niedrigpreissegment zuverlässig bei hoher Lebensdauer betrieben werden können.

## Patentansprüche

1. Verfahren zur strom- und/oder spannungsabhängigen Temperaturbegrenzung bei einer einem elektrischen Motor (M) zugeordneten Ansteuervorrichtung (10), insbesondere bei einem Gebläseregler (12) eines Kraftfahrzeugs, **dadurch gekennzeichnet, dass** die Temperaturbegrenzung in Abhängigkeit von mindestens einem Betriebsparameter des Motors (M) derart durchgeführt wird, dass bei steigendem Betriebsstrom (I) und/oder steigender Versorgungsspannung (U) zumindest ab einem vorgegebenen Schwellenwert (I_{S,} U_{S}) der Maximalwert (Tₘₐₓ) einer zulässigen Temperatur der Ansteuervorrichtung (10) reduziert wird.

2. Verfahren nach Anspruch 1, **dadurch gekennzeichnet, dass** bei einer Temperaturbegrenzung in Abhängigkeit von mehreren Betriebsparametern die für jeden Betriebsparameter vorgesehenen Reduzierungen des Maximalwerts (Tₘₐₓ) einer zulässigen Temperatur zu einer Gesamtreduzierung des Maximalwerts (Tₘₐₓ) zusammengeführt werden.

3. Verfahren nach einem der vorhergehenden Ansprüche, **dadurch gekennzeichnet, dass** die Temperaturbegrenzung aktiviert wird, bevor der Maximalwert (Tₘₐₓ) einer zulässigen Temperatur der Ansteuervorrichtung (10) erreicht wird.

4. Vorrichtung (1) zur strom- und/oder spannungsabhängigen Temperaturbegrenzung bei einer einem elektrischen Motor (M) zugeordneten Ansteuervorrichtung (10), insbesondere bei einem Gebläseregler (12) eines Kraftfahrzeugs, **gekennzeichnet durch** eine Schaltvorrichtung (14), die einen Temperaturregler (20) aufweist, der insbesondere als Verstärker (22) ausgeführt ist und dessen Ausgang (24) einem die Ansteuerung des Motors (M) beeinflussenden Leistungshalbleiterbauelement (26) derart zugeordnet ist, dass eine Temperaturbegrenzung in Abhängigkeit von mindestens einem Betriebsparameter des Motors (M) durchgeführt wird, wobei bei steigendem Betriebsstrom (I) und/oder steigender Versorgungsspannung (U) zumindest ab einem vorgegebenen Schwellenwert (I_{S}, U_{S}) der Maximalwert (Tₘₐₓ) einer zulässigen Temperatur der Ansteuervorrichtung (10) reduziert wird.

5. Vorrichtung (1) nach Anspruch 4, **dadurch gekennzeichnet, dass** dem Temperaturregler (20) zur Überwachung des Betriebsstroms (I) ein Bauelement (28) mit einer temperaturabhängigen Eigenschaft, insbesondere ein Widerstand (R3) mit einem negativen Temperaturkoeffizienten, und/oder zur Überwachung der Versorgungsspannung (U) eine Zehnerdiode (D3) zugeordnet ist.

6. Gebläseregler (12) mit einer Vorrichtung (1) nach einem der vorhergehenden Ansprüche 4 oder 5.

## Claims

1. Method for limiting the temperature in an actuation apparatus (10), which is associated with an electric motor (M), in particular in a blower controller (12) of a motor vehicle, in a current- and/or voltage-dependent manner, **characterized in that** the temperature is limited as a function of at least one operating parameter of the motor (M) in such a way that the maximum value (Tₘₐₓ) of a permissible temperature of the actuation apparatus (10) is reduced when the operating current (I) increases and/or the supply voltage (U) increases at least starting from a predefined threshold value (I_{S}, U_{S}).

2. Method according to Claim 1, **characterized in that**, when the temperature is limited as a function of several operating parameters, the reductions in the maximum value (Tₘₐₓ) of a permissible temperature which are provided for each operating parameter are combined to form a total reduction of the maximum value (Tₘₐₓ).

3. Method according to either of the preceding claims, **characterized in that** the temperature limitation process is activated before the maximum value (Tₘₐₓ) of a permissible temperature of the actuation apparatus (10) is reached.

4. Apparatus (1) for limiting the temperature in a current- and/or voltage-dependent manner in an actuation apparatus (10), which is associated with an electric motor (M), in particular in a blower controller (12) of a motor vehicle, **characterized by** a switching apparatus (14) which has a temperature controller (20) which is designed, in particular, as an amplifier (22) and of which the output (24) is associated with a power semiconductor component (26), which influences the actuation of the motor (M), in such a way that the temperature is limited as a function of at least one operating parameter of the motor (M), wherein the maximum value (Tₘₐₓ) of a permissible temperature of the actuation apparatus (10) is reduced when the operating current (I) increases and/or the supply voltage (U) increases at least starting from a predefined threshold value (I_{S}, U_{S}).

5. Apparatus (1) according to Claim 4, **characterized in that** a component (28) with a temperature-dependent property, in particular a resistor (R3) with a negative temperature coefficient, is associated with the temperature controller (20) for the purpose of monitoring the operating current (I), and/or a zener diode (D3) is associated with the temperature controller (20) for the purpose of monitoring the supply voltage (U).

6. Blower controller (12) having an apparatus (1) according to either of the preceding Claims 4 and 5.

## Revendications

1. Procédé de limitation de la température en fonction du courant et/ou de la tension dans un dispositif de commande (10) associé à un moteur (M), en particulier dans un régulateur de ventilateur (12) d'un véhicule automobile, **caractérisé en ce que** la limitation de la température est réalisée en fonction d'au moins un paramètre de fonctionnement du moteur (M) de telle sorte que lorsque le courant de fonctionnement (I) augmente et/ou que la tension d'alimentation (U) augmente, au moins à partir d'une valeur seuil prédéfinie (Iₛ, Uₛ), la valeur maximale (Tₘₐₓ) d'une température admissible du dispositif de commande (10) est réduite.

2. Procédé selon la revendication 1, **caractérisé en ce que** dans le cas d'une limitation de la température en fonction de plusieurs paramètres de fonctionnement, les réductions de la valeur maximale (Tₘₐₓ) d'une température admissible prévues pour chaque paramètre de fonctionnement sont réunies pour donner une réduction d'ensemble de la valeur maximale (Tₘₐₓ).

3. Procédé selon l'une quelconque des revendications précédentes, **caractérisé en ce que** la limitation de la température est activée avant que la valeur maximale (Tₘₐₓ) d'une température admissible du dispositif de commande (10) ne soit atteinte.

4. Dispositif (1) de limitation de la température en fonction du courant et/ou de la tension dans un dispositif de commande (10) associé à un moteur (M), en particulier dans un régulateur de ventilateur (12) d'un véhicule automobile, **caractérisé par** un dispositif de commutation (14), qui présente un régulateur de température (20) qui est réalisé notamment sous forme d'amplificateur (22) et dont la sortie (24) est associée à un composant semi-conducteur de puissance (26) influençant la commande du moteur (M) de telle sorte qu'une limitation de la température soit effectuée en fonction d'au moins un paramètre de fonctionnement du moteur (M), la valeur maximale (Tₘₐₓ) d'une température admissible du dispositif de commande (10) étant réduite lorsque le courant de fonctionnement (I) augmente et/ou que la tension d'alimentation (U) augmente, au moins à partir d'une valeur seuil prédéfinie (I_{S}, U_{S}).

5. Dispositif (1) selon la revendication 4, **caractérisé en ce qu**'au régulateur de température (20) est associé un composant (28) ayant une propriété dépendant de la température, notamment une résistance (R3) avec un coefficient de température négatif, pour contrôler le courant de fonctionnement (I), et/ou est associée une diode Zehner (D3) pour contrôler la tension d'alimentation (U).

6. Régulateur de ventilateur (12) comprenant un dispositif (1) selon l'une quelconque des revendications 4 ou 5.
